# EUROPEAN PATENT SPECIFICATION

(11) **EP 1 271 874 B1**
(45) Date of publication and mention of the grant of the patent: **11.07.2007**
(21) Application number: 01930214.0
(22) Date of filing: 18.05.2001
(51) Int. Cl.: H04L 27/38

(54) **MULTILEVEL MODULATING METHOD WITH INSERTION OF DUMMY BITS**
MEHRSTUFIGES MODULATIONSVERFAHREN MIT EINFÜGEN VON DUMMY-BITS
PROCEDE DE MODULATION MULTI-NIVEAUX AVEC INSERTION DE BITS DE REMPLISSAGE

(30) Priority: 13.02.2001 WO PCT/JP01/00983
(43) Date of publication of application: 02.01.2003
(73) Proprietor: MITSUBISHI DENKI KABUSHIKI KAISHA, Chiyoda-ku Tokyo 100-8310 (JP)
(72) Inventor: TAKANO, Michiaki,c/o MITSUBISHI DENKI K.K., Tokyo 100-8310 (JP); ABE, Minoru, c/o MITSUBISHI DENKI K.K., Tokyo 100-8310 (JP); SUZUKI, Kuniyuki,c/o MITSUBISHI DENKI K.K., Tokyo 100-8310 (JP); DUAN, Jinsong,c/o MITSUBISHI DENKI K.K., Tokyo 100-8310 (JP); FUJIHARA, Nobuo, c/o MITSUBISHI DENKI K.K., Tokyo 100-8310 (JP); YAMAGUCHI, Nobuyasu, c/o MITSUBISHI DENKI K.K., Tokyo 100-8310 (JP); YAMAZAKI, Takuya,c/o MITSUBISHI DENKI K.K., Tokyo 100-8310 (JP)
(74) Representative: Popp, Eugen
(86) International application number: PCT/JP2001/004182
(87) International publication number: WO 2002/065723

(56) References cited:
- WO-A-99/25103
- JP-A- 2 279 033
- JP-A- 8 501 665
- JP-A- 9 252 326
- JP-A- 10 013 404
- JP-A- 10 136 046
- JP-A- 11 168 522
- JP-A- 11 177 527
- JP-A- 61 281 654
- JP-A- 62 176 243
- JP-A- 63 156 450
- JP-A- 2000 124 818
- US-A- 5 481 561
- KEN-ICHI KONISHI ET AL: "ERROR-RATE PERFORMANCE OF BLOCK-CODED M-ARY MODULATION AND HARD DECISION DECODING SYSTEMS ON RAYLEIGH FADING CHANNEL" ELECTRONICS & COMMUNICATIONS IN JAPAN, PART I - COMMUNICATIONS, WILEY, HOBOKEN, NJ, US, vol. 74, no. 6, 1 June 1991 (1991-06-01), pages 97-106, XP000275285 ISSN: 8756-6621

## Description

### TECHNICAL FIELD

The present invention relates to a multi-level modulation method, multi-level demodulation method and multi-level modulation and demodulation method for modulating or demodulating data consisting of a plurality of symbols.

### BACKGROUND ART

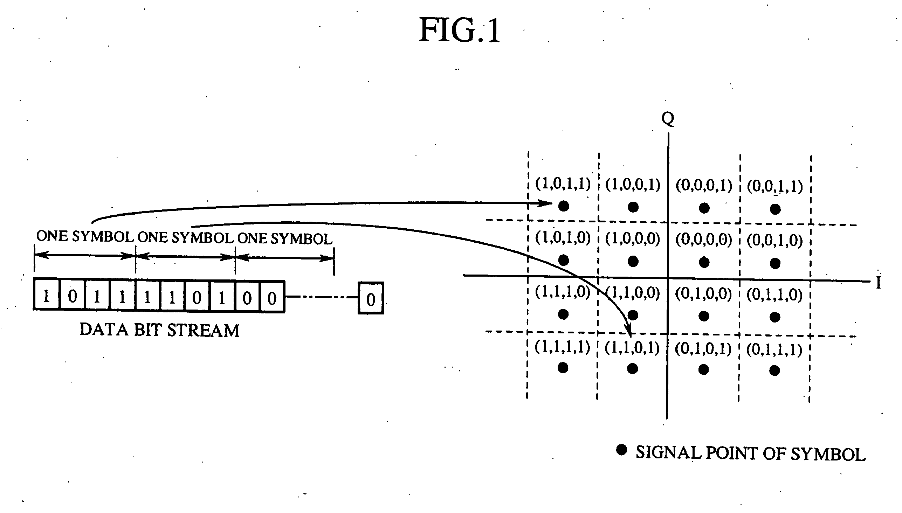

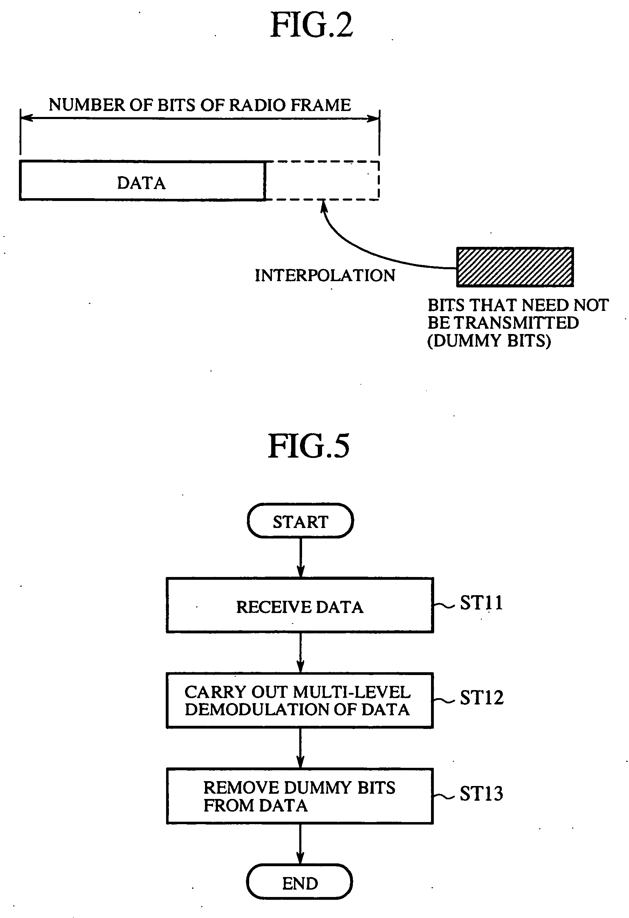

As shown in Fig. 1, a conventional multi-level modulation method transmits data consisting of a plurality of symbols by passing the data through multi-level modulation (Fig. 1 shows an example in which each symbol undergoes 4-bit 16 QAM). When the number of bits of the data is less than that of a radio frame as shown in Fig. 2, however, the data cannot undergo the multi-level modulation. Thus, the data is provided with additional dummy bits to be interleaved.

Although this enables the data to pass through the multi-level modulation, since the dummy bits are DTX bits other than "0" or "1", and the insertion position of each dummy bit is determined randomly with respect to the symbols, the transmission power of each symbol after interleaving (symbol including a dummy bit) can either increase or decrease.

With the foregoing configuration, the conventional multi-level modulation method has the following problem: The transmission power of the symbol constituting the data is not always small, and the increase in the transmission power of the symbol causes a problem of increasing the interference to other signals.

The present invention is implemented to solve the foregoing problem. Therefore, an object of the present invention is to provide a multi-level modulation method capable of reducing the transmission power of the symbol and the interference to other signals.

Ken-Ichi Konishi Et. Al.: "Error-rate performance of block-coded M-ary modulation and hard decision decoding systems on Rayleigh fading channel" Electronics & Communications in Japan, Part I-Communications, Wiley, Hoboken, NJ, US, vol. 74, no. 6, 1 June 1991 (1991-06-01), pages 97-106, is considered to be the closest prior art, and discloses a multi-level modulation method. No discussion is made, however, of inserting dummy bits into data such that a signal constellation of a symbol is placed at an inmost possible region.

### DISCLOSURE OF THE INVENTION

A multi-level modulation method, wherein multi-level modulation of data is performed by adding a dummy bit to data when a number of bits of the data is less than a number of bits of a radio frame, the multi-level modulation method comprising the steps of: mapping a bit stream of the data such that a specified bit of at least one symbol becomes a dummy bit, and further when adding each dummy bit to the data, disposing one of the dummy bits and selecting its value between "0" and "1" such that a signal constellation of the symbol is placed at an inmost possible region and transmitting the data which consists of a plurality of symbols.

Thus, it offers an advantage of being able to reduce the transmission power of the symbol and the interference to other signals.

### BRIEF DESCRIPTION OF THE DRAWINGS

Fig. 1 is a diagram showing a bit stream of data and a signal constellation of symbols;
Fig. 2 is a diagram showing an insertion state of dummy bits;
Fig. 3 is a block diagram showing a configuration of a multi-level modulation and demodulation system to which a multi-level modulation and demodulation method is applied;
Fig. 4 is a flowchart illustrating a multi-level modulation method;
Fig. 5 is a flowchart illustrating a multi-level demodulation method;
Fig. 6 is a diagram showing a bit stream of data and a signal constellation of symbols;
Fig. 7 is a diagram showing a signal constellation of symbols when dummy bits are inserted;
Fig. 8 is a diagram showing a bit stream of data and a signal constellation of symbols;
Fig. 9 is a diagram showing a signal constellation of symbols when dummy bits are inserted;
Fig. 10 is a diagram showing distributed allocation of dummy bits;
Fig. 11 is a diagram showing an allocation example of dummy bits;
Fig. 12 is a diagram showing an allocation example of dummy bits when transmitting data in multi-code;
Fig. 13 is a table predefining bit values of dummy bits for allocating a signal constellation of symbols at the inmost possible region;
Fig. 14 is the table predefining the bit values of the dummy bits for allocating the signal constellation of symbols at the inmost possible region;
Fig. 15 is a diagram showing a 16-QAM signal constellation;
Fig. 16 is a diagram illustrating power of individual 16-QAM phase points;
Fig. 17 is a table predefining bit values of dummy bits for allocating a signal constellation of symbols at the inmost possible region;
Fig. 18 is the table predefining the bit values of the dummy bits for allocating the signal constellation of the symbols at the inmost possible region;
Fig. 19 is the table predefining the bit values of the dummy bits for allocating the signal constellation of the symbols at the inmost possible region;
Fig. 20 is the table predefining the bit values of the dummy bits for allocating the signal constellation of the symbols at the inmost possible region;
Fig. 21 is the table predefining the bit values of the dummy bits for allocating the signal constellation of the symbols at the inmost possible region;
Fig. 22 is the table predefining the bit values of the dummy bits for allocating the signal constellation of the symbols at the inmost possible region;
Fig. 23 is the table predefining the bit values of the dummy bits for allocating the signal constellation of the symbols at the inmost possible region;
Fig. 24 is the table predefining the bit values of the dummy bits for allocating the signal constellation of the symbols at the inmost possible region;
Fig. 25 is the table predefining the bit values of the dummy bits for allocating the signal constellation of the symbols at the inmost possible region;
Fig. 26 is the table predefining the bit values of the dummy bits for allocating the signal constellation of the symbols at the inmost possible region;
Fig. 27 is the table predefining the bit values of the dummy bits for allocating the signal constellation of the symbols at the inmost possible region;
Fig. 28 is the table predefining the bit values of the dummy bits for allocating the signal constellation of the symbols at the inmost possible region;
Fig. 29 is the table predefining the bit values of the dummy bits for allocating the signal constellation of the symbols at the inmost possible region;
Fig. 30 is the table predefining the bit values of the dummy bits for allocating the signal constellation of the symbols at the inmost possible region;
Fig. 31 is a diagram showing a 64-QAM signal constellation; and
Fig. 32 is a diagram illustrating power of individual 64-QAM phase points.

### BEST MODE FOR CARRYING OUT THE INVENTION

The best mode for carrying out the present invention will now be described with reference to the accompanying drawings.

### EMBODIMENT 1

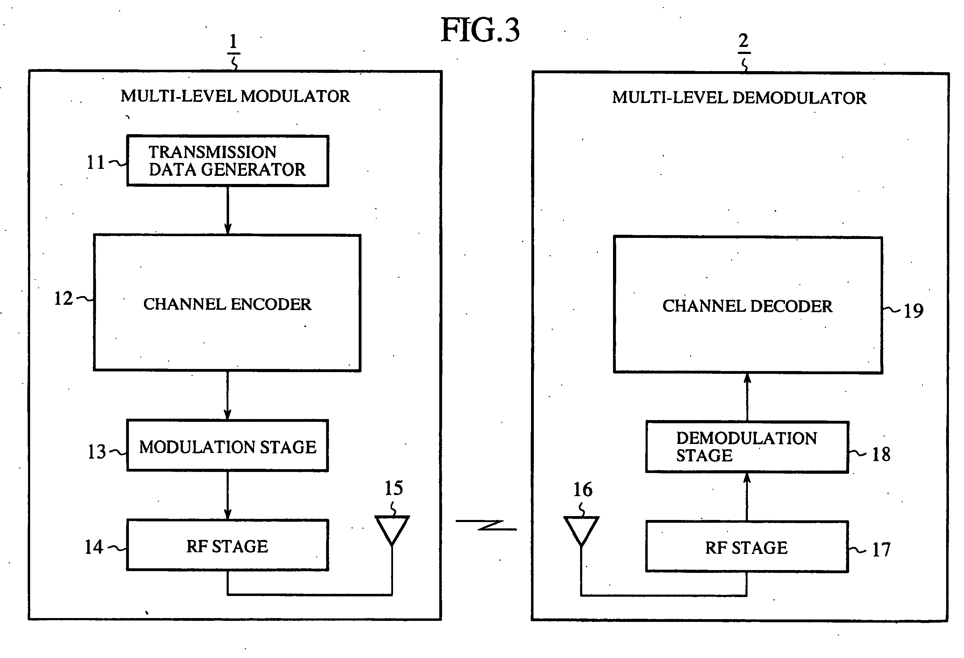

Fig. 3 is a block diagram showing a configuration of a multi-level modulation and demodulation system to which a multi-level modulation method of an embodiment 1 in accordance with the present invention, and a multi-level demodulation method, not forming part of the claimed invention, is applied. In this figure, the reference numeral 1 designates a multi-level modulator for carrying out multi-level modulation of data consisting of a plurality of symbols to be transmitted, and 2 designates a multi-level demodulator for receiving the data consisting of a plurality of symbols and carrying out multi-level demodulation.
The reference numeral 11 designates a transmission data generator for generating the data consisting of a plurality of symbols; 12 designates a channel encoder for mapping the bit stream of the data in such a manner that a specified bit of at least one symbol becomes a dummy bit, when the number of bits of the data generated by the data transmission data generator 11 is less than that of the radio frame; 13 designates a modulation stage for carrying out multi-level modulation of the data output from the channel encoder 12; 14 designates an RF stage for causing an antenna 15 to make radio transmission of the data passing through the multi-level modulation by the modulation stage 13; and 15 designates the antenna.

The reference numeral 16 designates an antenna; 17 designates an RF stage for receiving the data transmitted from the multi-level modulator 1; 18 designates a demodulation stage for carrying out multi-level demodulation of the data received by the RF stage 17; and 19 designates a channel decoder for removing the dummy bits from the data passing through the multi-level demodulation by the demodulation stage 18.

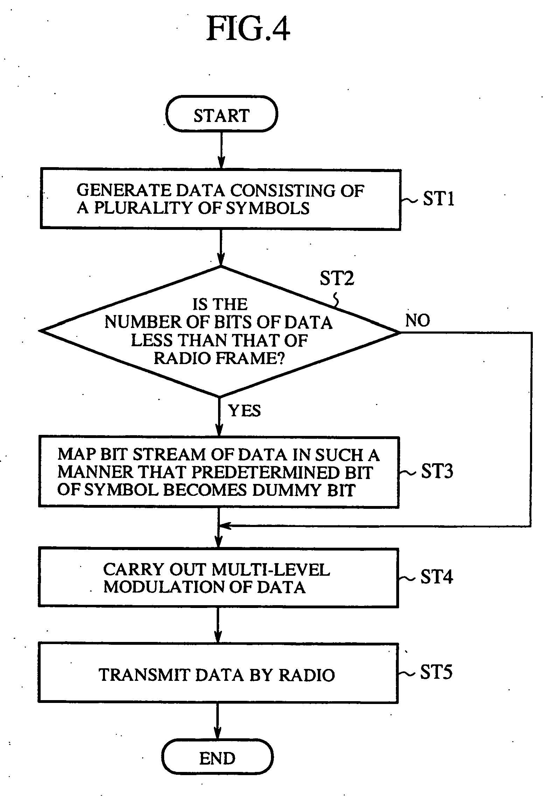

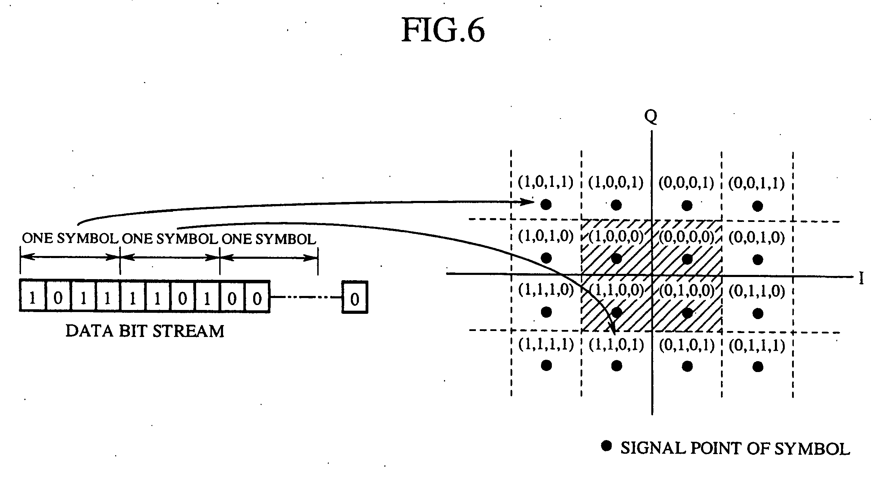

Fig. 4 is a flowchart illustrating the multi-level modulation method of the embodiment 1 in accordance with the present invention; and Fig. 5 is a flowchart illustrating the multi-level demodulation method.

Next, the operation will be described.

First, the transmission data generator 11 of the multi-level modulator 1 generates the data consisting of a plurality of symbols as illustrated in Fig. 6 (step ST1). For convenience of explanation, it is assumed that each symbol generates 4-bit data, and undergoes 16-QAM multi-level modulation.

When the number of bits of the data generated by the transmission data generator 11 is less than that of the radio frame, the channel encoder 12 cannot perform the multi-level modulation of the data. Accordingly, it maps the bit stream of the data such that a specified bit of at least one symbol becomes a dummy bit (steps ST2 and ST3).

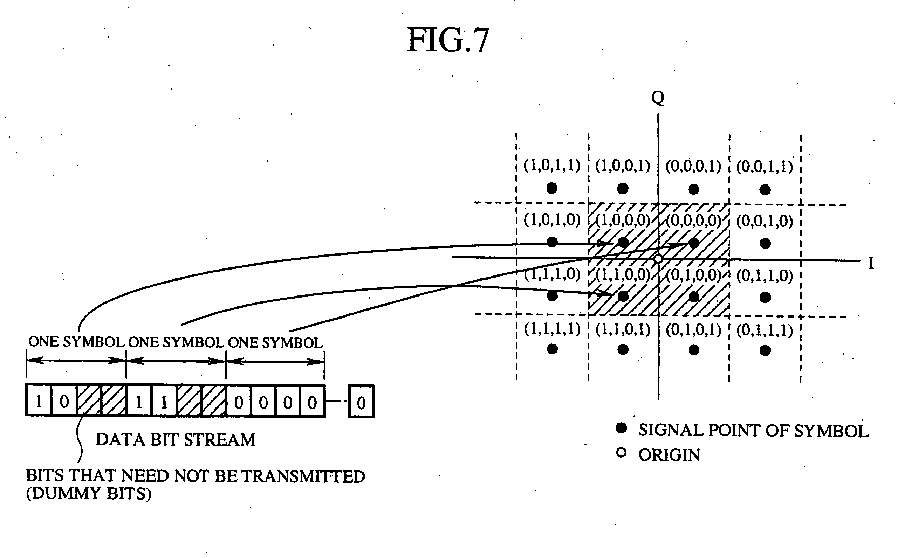

Specifically, as illustrated in Fig. 7, the channel encoder 12 maps the bit stream of the data such that the lowest two bits of the symbols are assigned dummy bits of "0". The signal points of the symbols with their lowest two bits being "0" are allocated at shaded regions adjacent to the origin of an IQ coordinate system, at which the power amplitude is zero. Therefore, the transmission power of the symbols is small.

When the channel encoder 12 completes the mapping of the bit stream of the data, the modulation stage 13 carries out the multi-level modulation of the data after mapping (step ST4).

The RF stage 14 conducts the radio transmission of the data passing through the multi-level modulation by the modulation stage 13 using the antenna 15 (step ST5).

On the other hand, the RF stage 17 of the multi-level demodulator 2 receives the data transmitted by the multi-level modulator 1 (step ST11).

The demodulation stage 18 carries out the multi-level demodulation of the data received by the RF stage 17 (step ST12).

The channel decoder 19 removes the dummy bits from the data passing through the multi-level demodulation by the demodulation stage 18 (step ST13). Specifically, the channel decoder 19, receiving information about the symbols and bit positions of the dummy bits from the multi-level modulator 1, recognizes the insertion position of the dummy bits, and eliminates the dummy bits from the data.

As described above, the embodiment 1 maps the bit stream of the data in such a manner that a specified bit or bits of at least one symbol become dummy bits. As a result, it offers an advantage of being able to reduce the transmission power of the symbol, thereby suppressing the interference to other signals.

Although the lowest two bits of the symbols are assigned the dummy bits of "0" in the present embodiment 1, this is not essential. For example, the transmission power can be turned off at the positions.

### EMBODIMENT 2

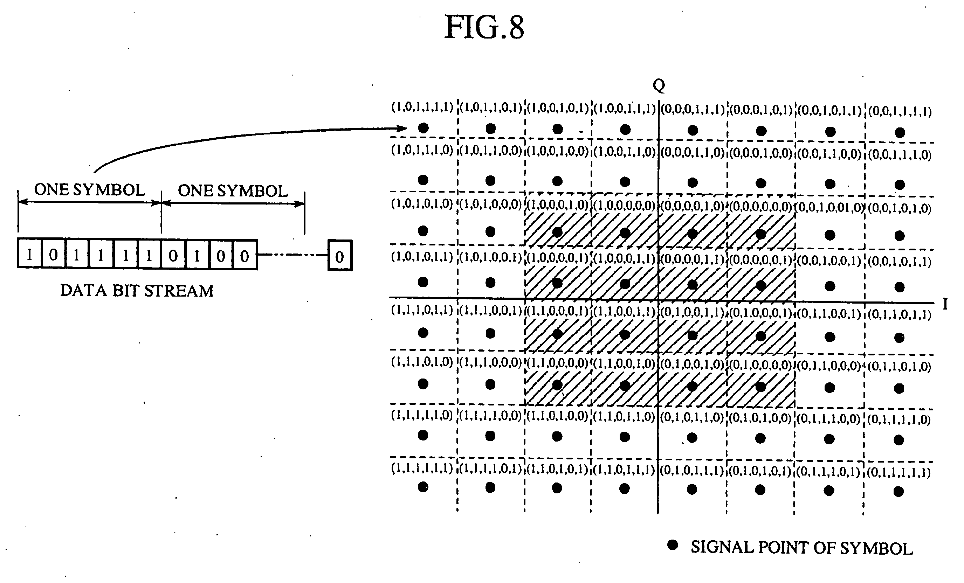

Although the foregoing embodiment 1 carries out the 4-bit 16 QAM of each symbol, the present embodiment 2 conducts 6-bit 64 QAM of each symbol as shown in Fig. 8, in which case, two bits at the middle of the symbol are assigned the dummy bits of "0".

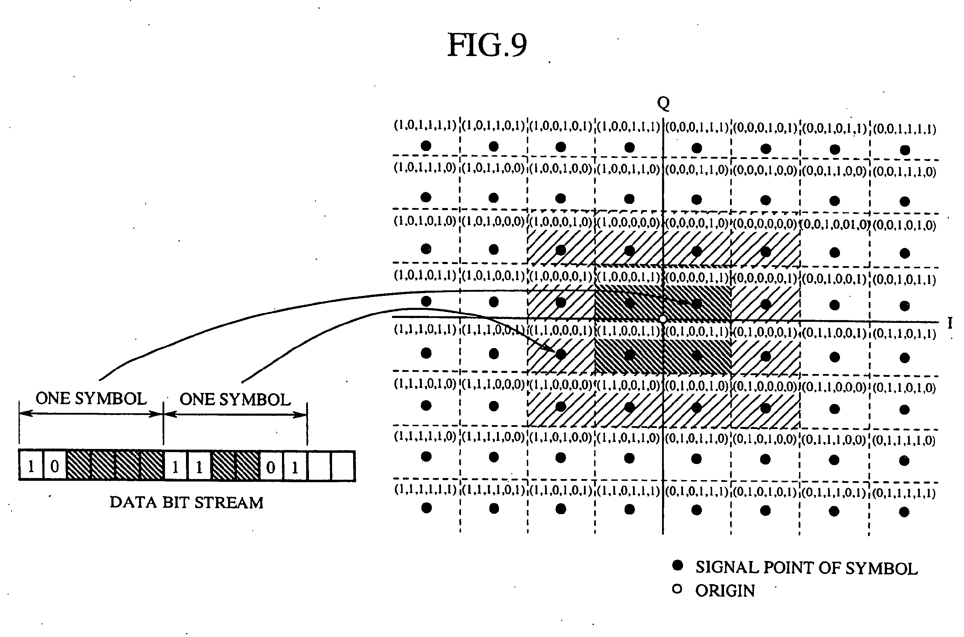

In this case, as shown in Fig. 9, the signal points of the symbols with their middle two bits being "0" are allocated at shaded regions close to the origin of the IQ coordinate system.

Thus, the transmission power of the symbols becomes small. To further reduce the transmission power, dummy bits of "1" are assigned to the lowest two bits of the symbol in addition to the dummy bits of "0" assigned to the two bits at the middle of the symbol.

In this case, as shown in Fig. 9, the signal points of the symbols are assigned to the boldly hatched region adjacent to the origin of the IQ coordinate system.

Incidentally, when the symbols undergo the 6-bit 64 QAM, the technique of turning off the transmission power is also applicable.

### EMBODIMENT 3

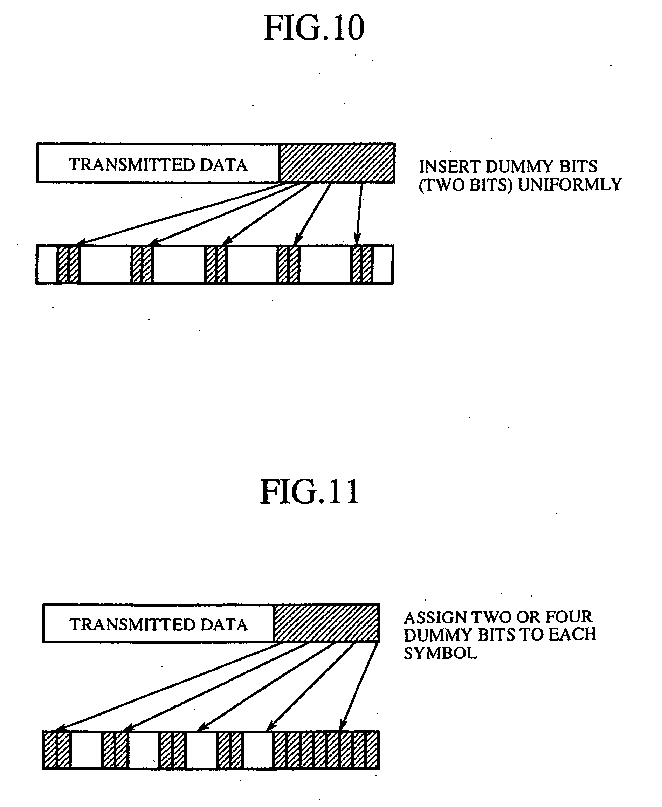

Although the foregoing embodiments 1 and 2 allocate the dummy bits to the predetermined bits of the symbol, this is not essential. In the present embodiment 3, the dummy bits are distributed among a plurality of symbols as shown in Fig. 10, thereby mapping the dummy bits as uniform as possible.

Thus, the present embodiment 3 offers an advantage of being able to prevent errors because of the effect of fading.

### EMBODIMENT 4

Although the dummy bits are distributed among a plurality of symbols in the embodiment 3, Fig. 11 shows another distribution, in which each symbol is assigned two dummy bits. If some dummy bits remain unassigned after completing the assignment of the dummy bits to all the symbols, they are assigned to some symbols four bits per symbol (in the example Fig. 11, the 4-bit allocation of the dummy bits is made to the right-hand symbols).

Thus, the present embodiment 4 offers an advantage of being able to prevent the error because of the effect of fading, and to reduce the transmission power of the data as a whole.

### EMBODIMENT 5

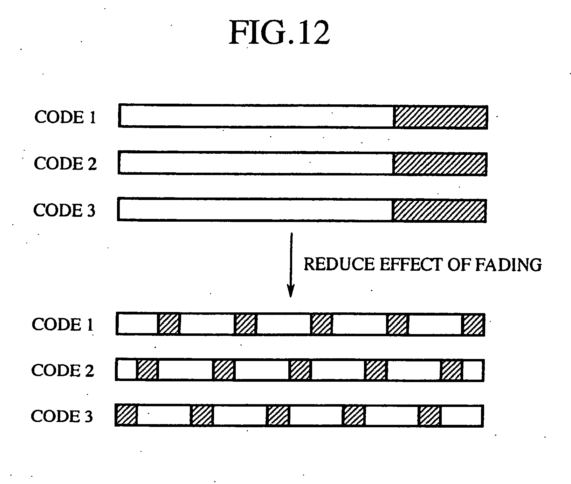

Although the embodiments 1-4 do not mention, when the multi-level modulator 1 transmits data in multi-code as shown in Fig. 12, the dummy bits of the individual codes are mapped such that their positions do not overlap with each other.

Thus, the present embodiment 5 offers an advantage of being able to prevent the error because of the effect of fading.

### EMBODIMENT 6

Although the foregoing embodiment 1 handles the case that places the dummy bits of "0" at the lowest two bits of the symbols, the dummy bits can be disposed in other positions as follows.

More specifically, as for the 16-QAM where each symbol consists of four bits {b0, b1, b2, b3}, 3⁴ = 81 ways of bit combinations will occur at the same probability when the occurrence probabilities of "0", "1" and "DTX (dummy bits)" are equal.

To reduce the transmission power of the symbol that includes at least one dummy bit in the four bits {b0, b1, b2, b3}, the dummybit is replaced by "0" or "1" so that the signal constellation of the symbol is placed at the inmost possible regions.

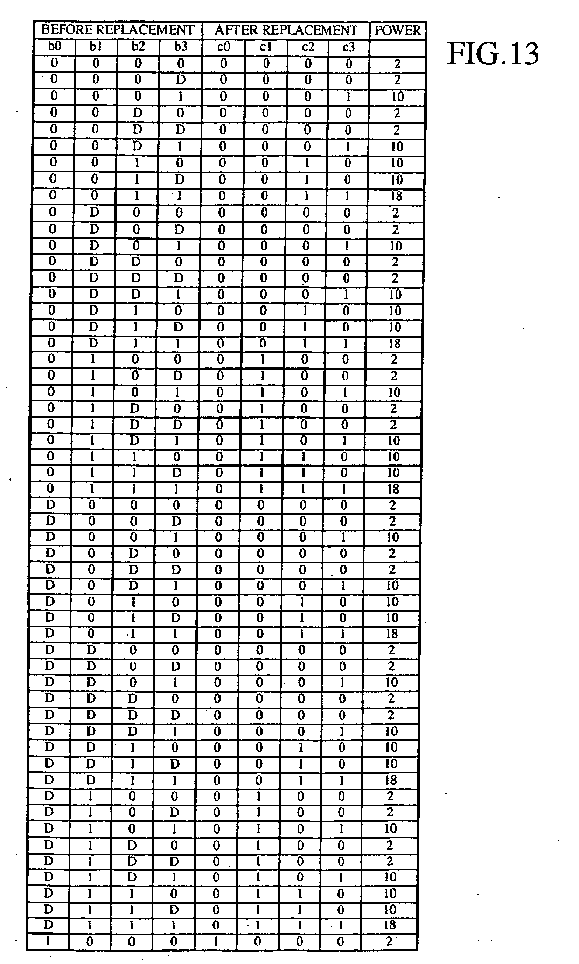

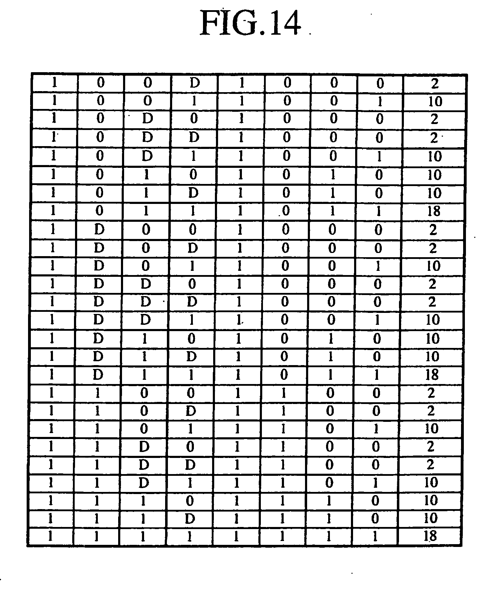

More specifically, when a symbol includes at least one dummy bit in the four bits {b0, b1, b2, b3}, the dummy bit is replaced by "0" or "1" with reference to the table as shown in Figs. 13 and 14, which predefines the bit values of the dummy bits in order to place the signal constellation of the symbols at the inmost possible regions. For example, when {b0, b1, b2, b3} = {D, D, 1, 0}, it is replaced by {0, 0, 1, 0}.

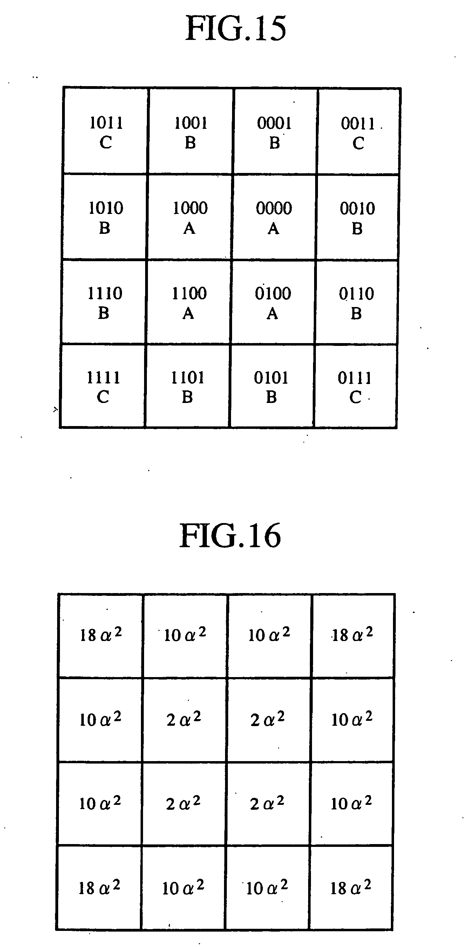

Fig. 15 is a diagram showing a 16-QAM signal constellation, and Fig. 16 is a diagram showing the power of the phase points.

As shown in Fig. 16, the power at the phase points A in Fig. 15 is least, the power at the phase points B is second, and the power at the phase points C is greatest. Therefore, the table is formed such that the phase points of the bit arrangement after the replacement become the phase points A whenever possible. The table is formed such that when the phase points A cannot be assigned, the phase points B are assigned, and when the phase points B cannot be assigned, the phase points C are assigned.

### EMBODIMENT 7

Although the foregoing embodiment 6 is applied to the 16-QAM where each symbol consists of four bits {b0, b1, b2, b3}, this is not essential. For example, the technique is also applicable to the 64-QAM where each symbol consists of six bits {b0, b1, b2, b3, b4, b5}.

As for the 64-QAM, 3⁶ = 729 ways of bit combinations will occur at the same probability when the occurrence probabilities of "0", "1" and "DTX (dummy bits)" are equal.

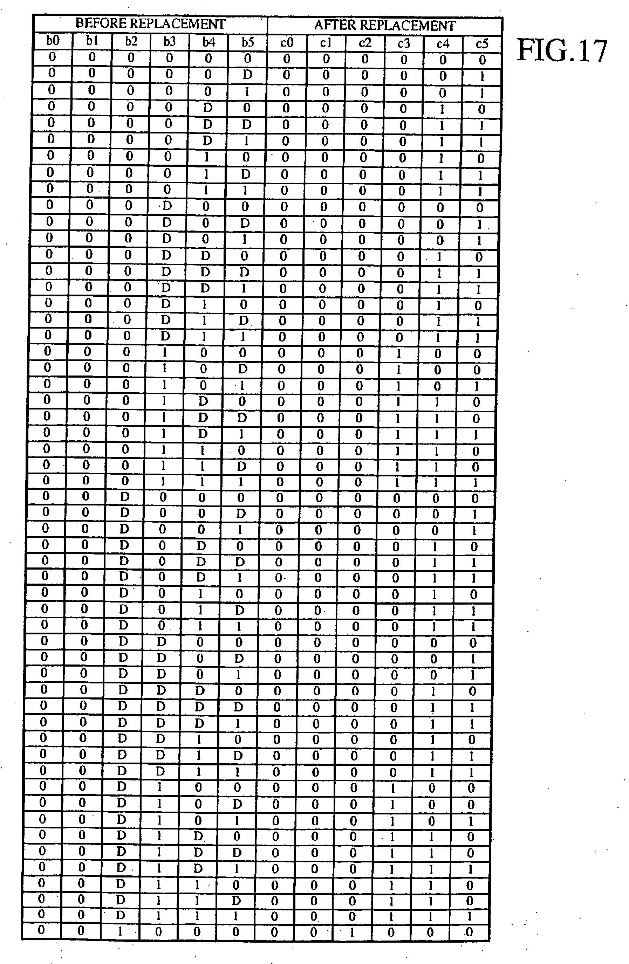

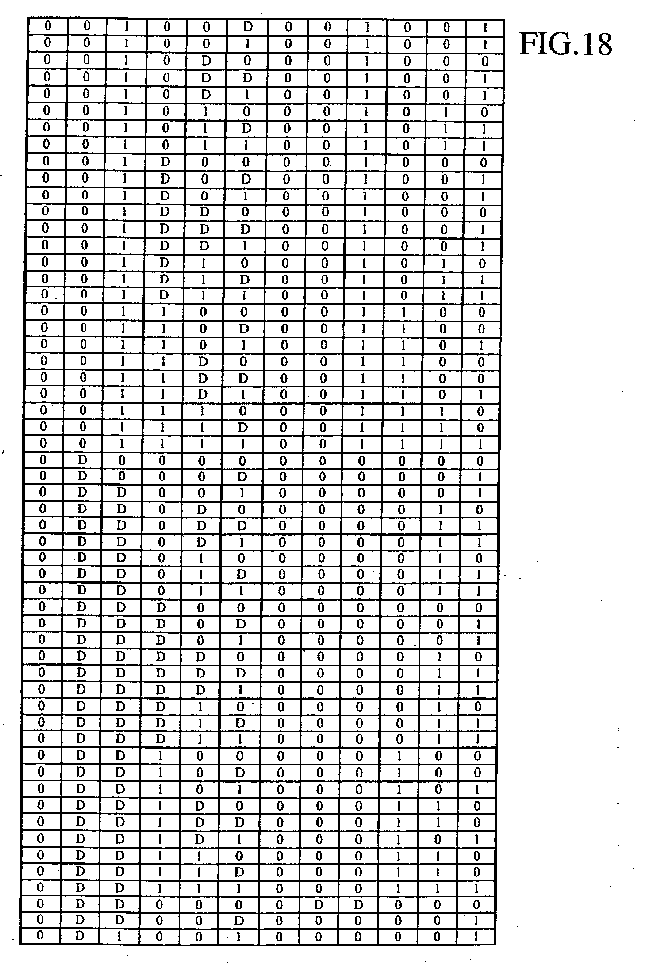

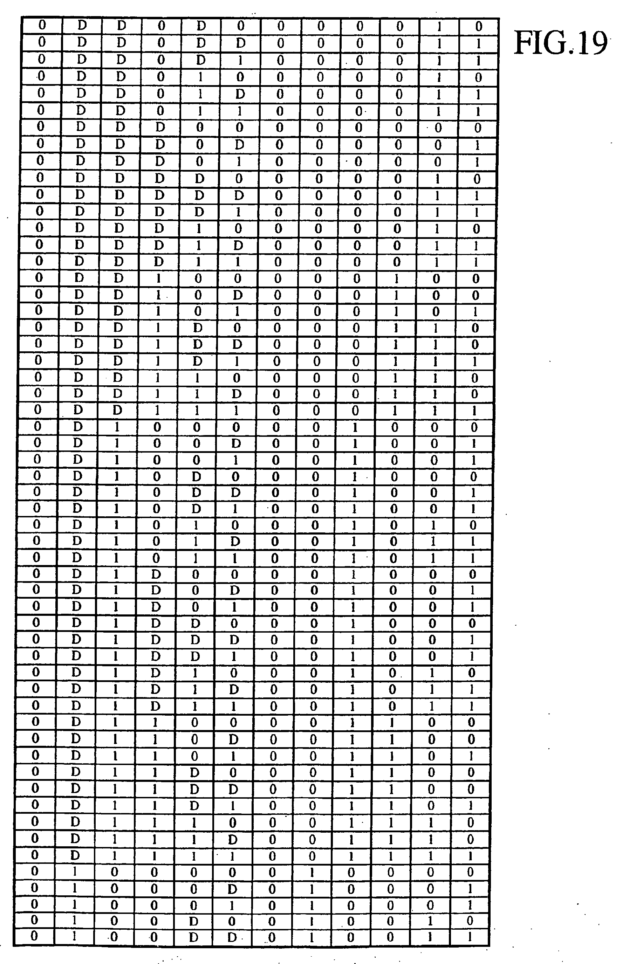

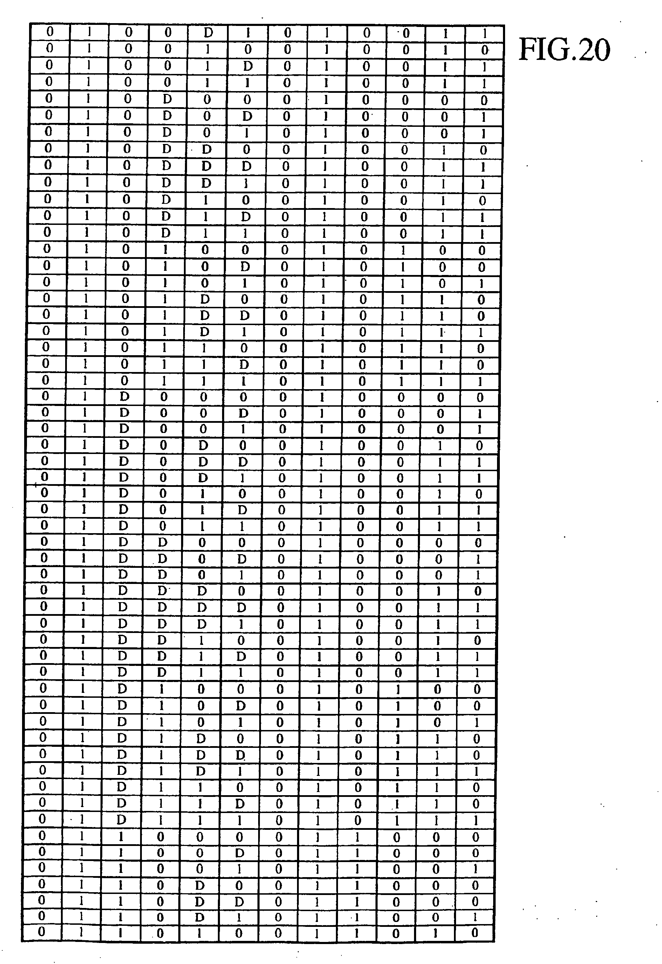

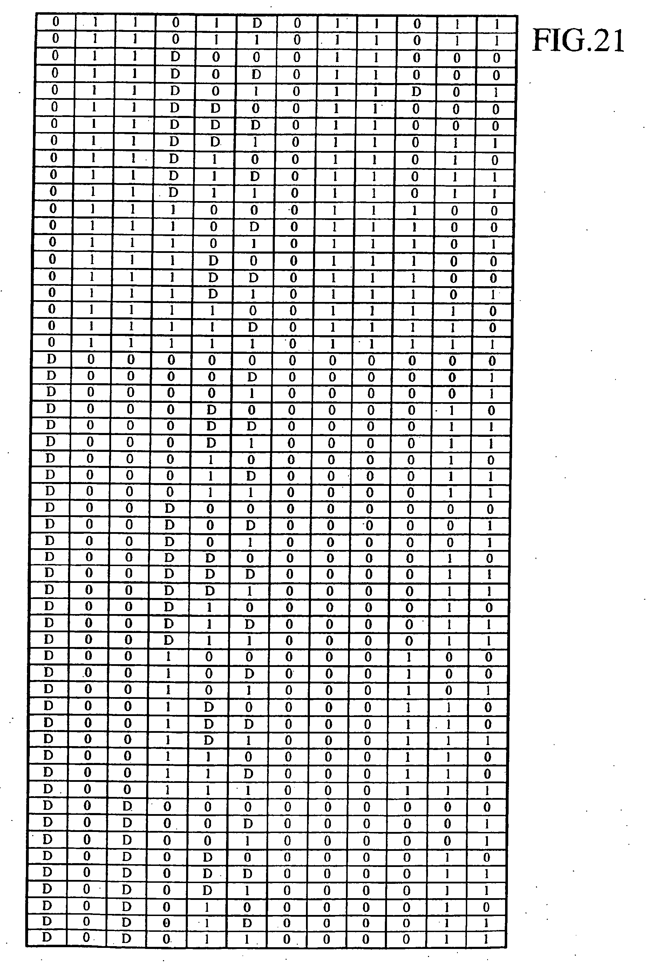

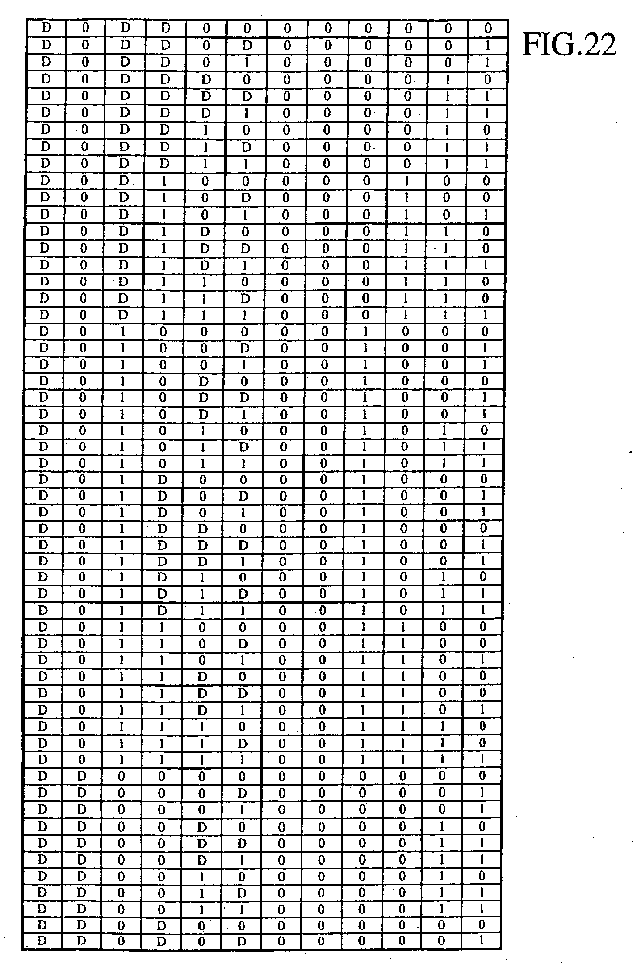

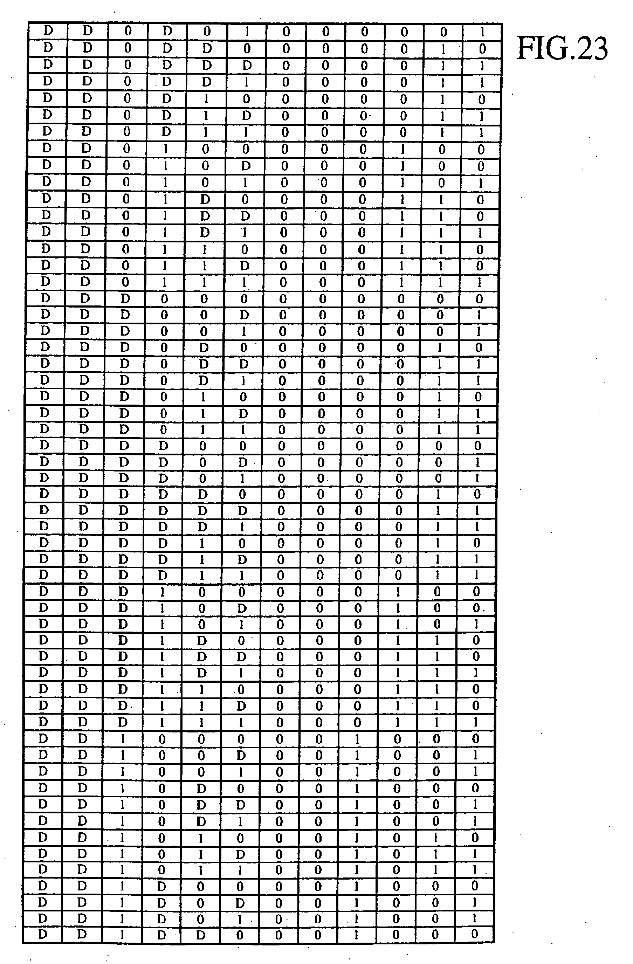

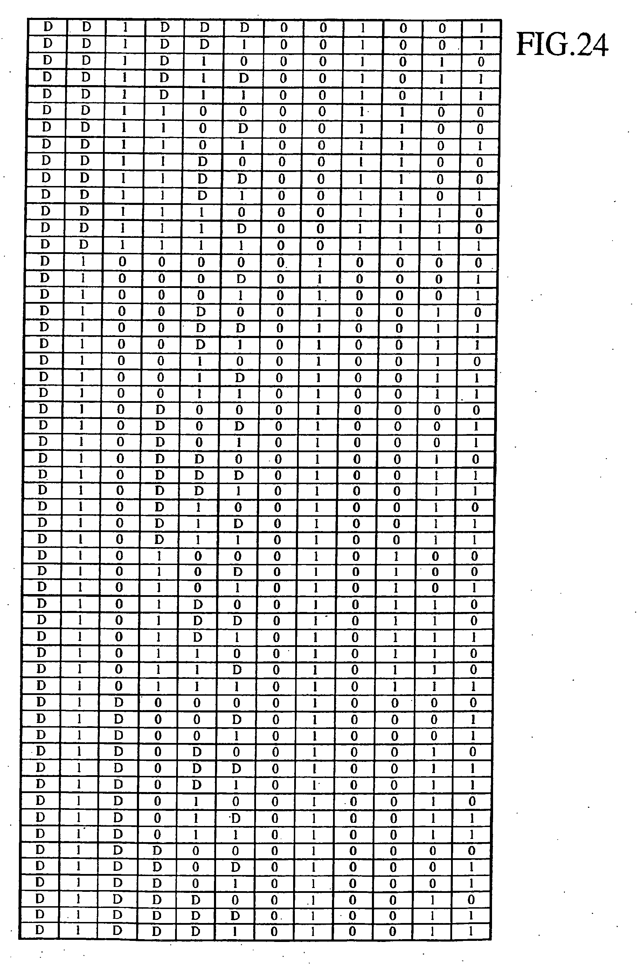

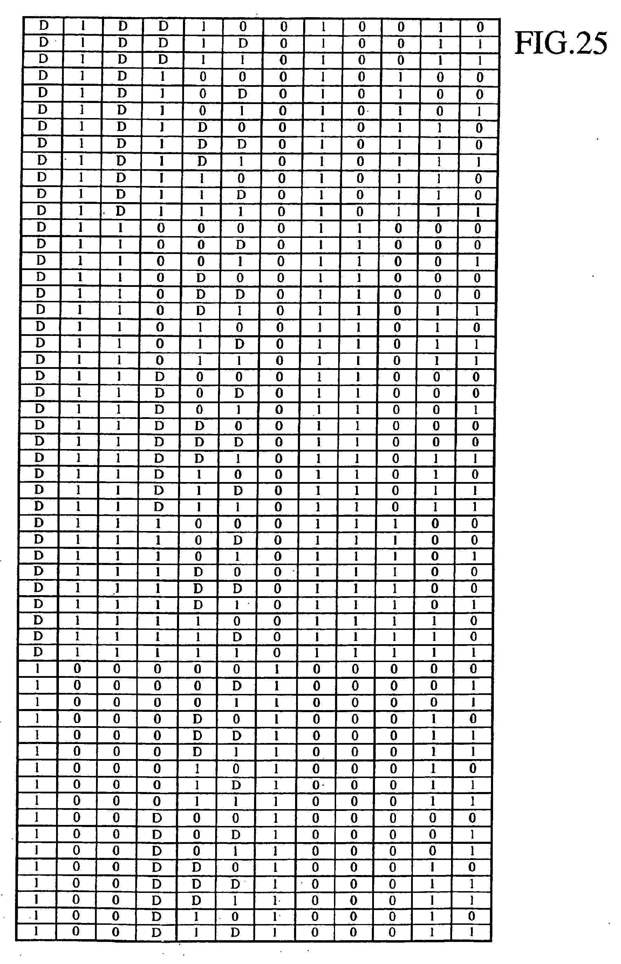

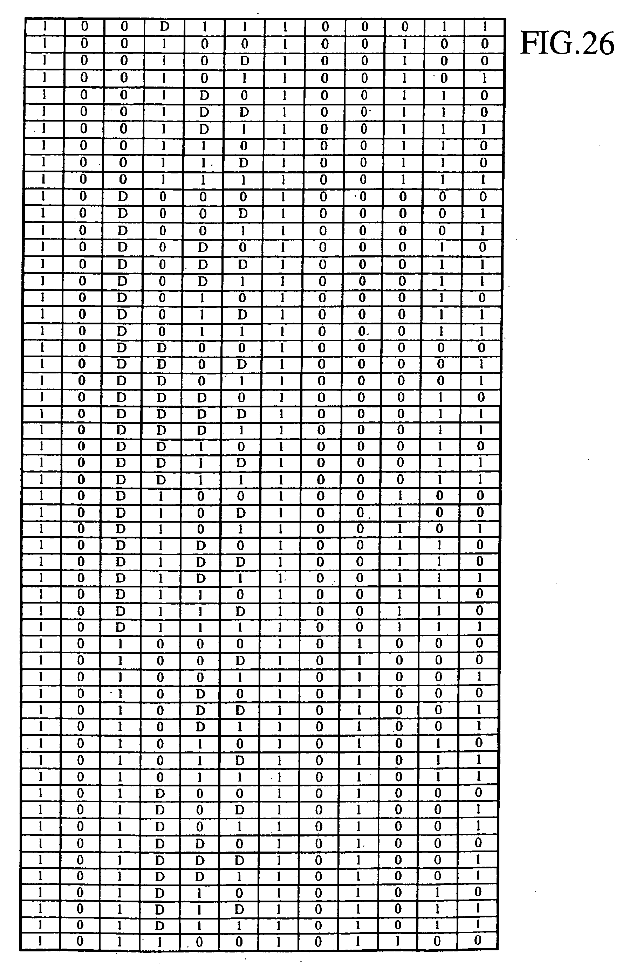

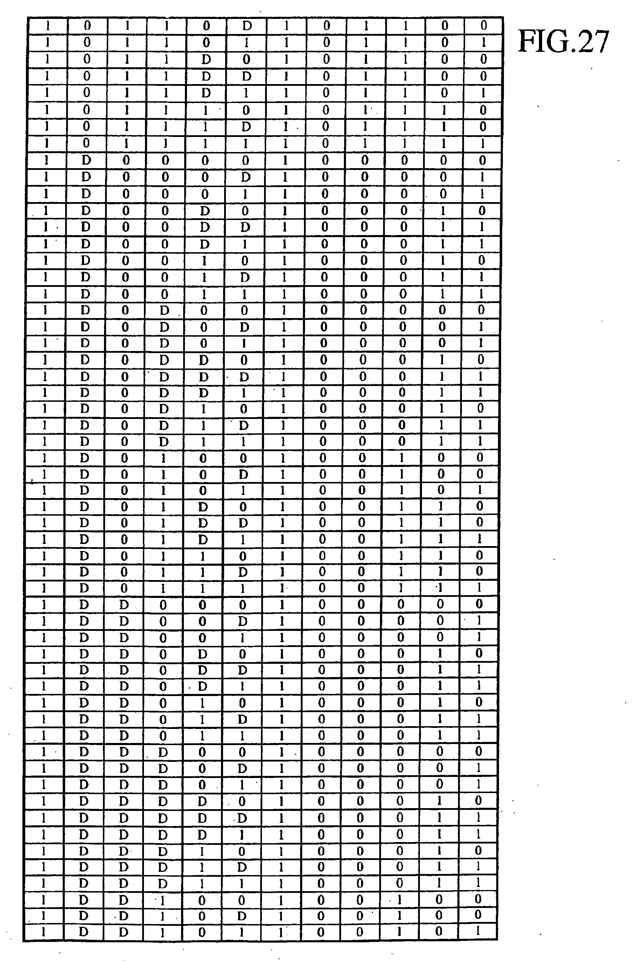

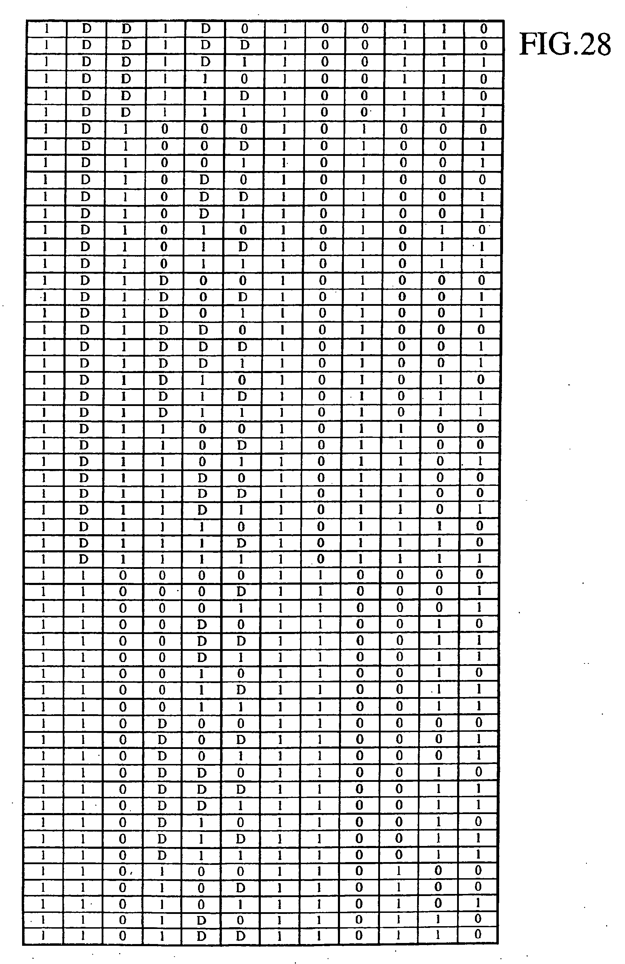

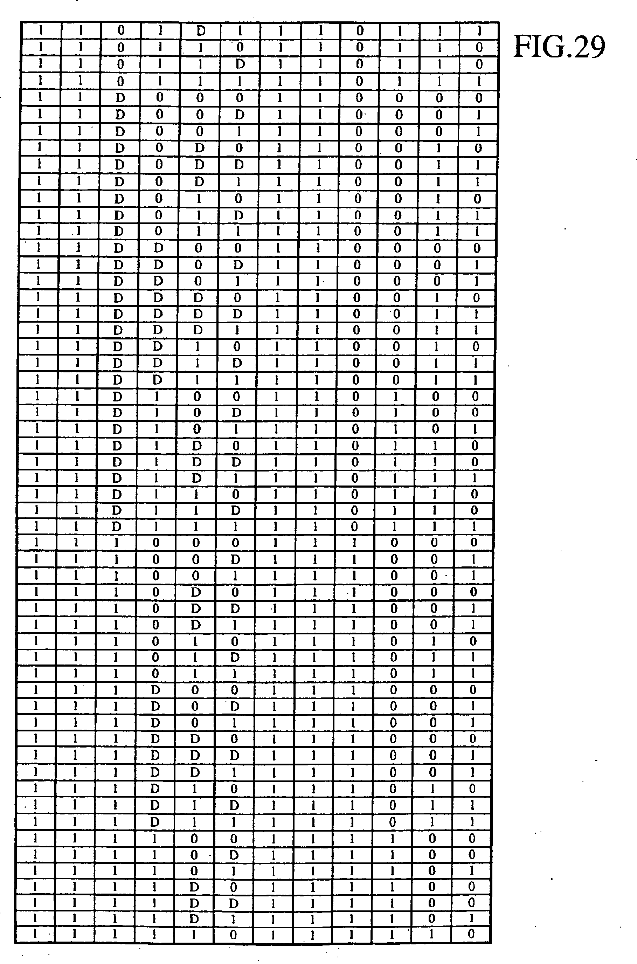

When a symbol includes at least one dummy bit in the six bits {b0, b1, b2, b3, b4, b5}, the dummy bit is replaced by "0" or "1" with reference to the table as shown in Figs. 17-30, which predefines the bit values of the dummy bits in order to place the signal constellation of the symbols at the inmost possible regions. For example, when {b0, b1, b2, b3, b4, b5} = {0, 0, D, 1, D, 0}, it is replaced by {0, 0, 0, 1, 1, 0}.

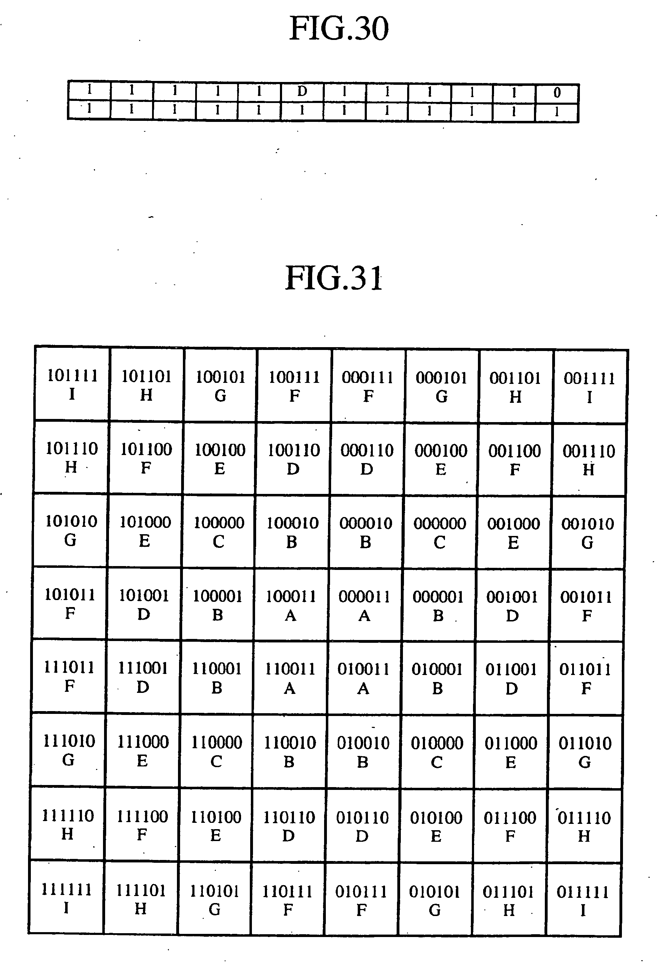

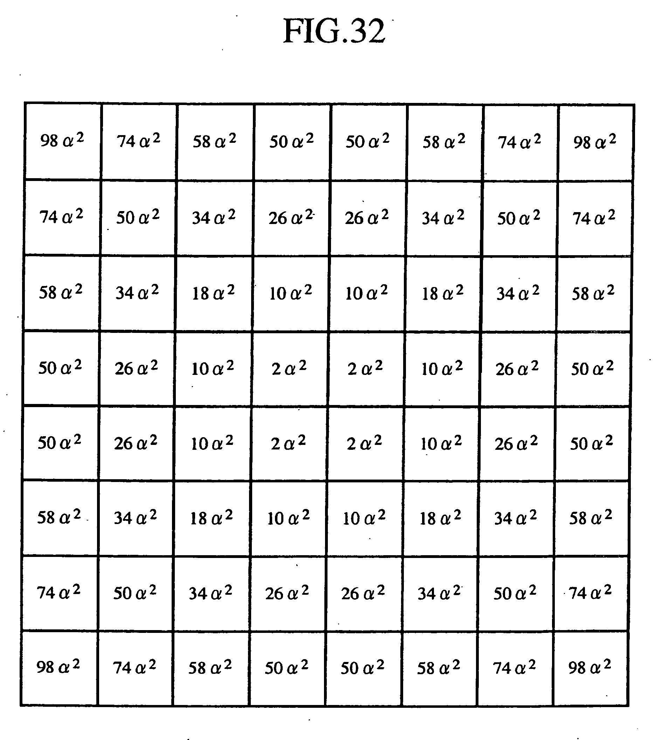

Fig. 31 is a diagram showing a 64-QAM signal constellation, and Fig. 32 is a diagram showing the power of the phase points

As shown in Fig. 32, the power increases from the phase points A to I. Therefore, the table is formed such that the phase points of the bit arrangement after the replacement become the phase points A or B whenever possible.

### INDUSTRIAL APPLICABILITY

As described above, the multi-level modulation and demodulation method in accordance with the present invention is suitable for the system required to reduce the transmission power of the data, and the interference to other signals.

More specifically, they are suitable for the multi-level modulation system at the transmitting side of a base station or a mobile station.

## Claims

1. A multi-level modulation method, wherein multi-level modulation of data is performed by adding a dummy bit to data when a number of bits of the data is less than a number of bits of a radio frame, the multi-level modulation method comprising the steps of:
mapping a bit stream of the data such that a specified bit of at least one symbol becomes a dummy bit, and further when adding each dummy bit to the data, disposing one of the dummy bits and selecting its value between "0" and "1" such that a signal constellation of the symbol is placed at an inmost possible region and transmitting the data which consists of a plurality of symbols.

2. The multi-level modulation method according to claim 1, wherein when the symbol undergoes 4-bit 16 QAM, a dummy bit of "0" is assigned to the last two bits of the symbol.

3. The multi-level modulation method according to claim 1, wherein when the symbol undergoes 4-bit 16 QAM, transmission power is turned off.

4. The multi-level modulation method according to claim 1, wherein when the symbol undergoes 6-bit 64 QAM, a dummy bit of "0" is assigned to intermediate two bits of the symbol.

5. The multi-level modulation method according to claim 1, wherein when the symbol undergoes 6-bit 64 QAM, a dummy bit of "0" is assigned to intermediate two bits of the symbol and a dummy bit of "1" is assigned to the last two bits of the symbol.

6. The multi-level modulation method according to claim 1, wherein when the symbol undergoes 6-bit 64 QAM, transmission power is turned off.

7. The multi-level modulation method according to claim 1, wherein when the dummy bits are added to the data, the dummy bits are distributed to a plurality of symbols.

8. The multi-level modulation method according to claim 1, wherein two dummy bits are assigned to each of the symbols, and when the dummy bits are left even after assigning the two dummy bits to each of all the symbols, another two bits are assigned to some of the symbols.

9. The multi-level modulation method according to claim 1, wherein when carrying out multi-code transmission of the data, the dummy bits are mapped such that their allocation positions in individual codes do not overlap with each other.

10. The multi-level modulation method according to claim 1, wherein one of the dummy bits of "0" and "1" is selected with reference to a table that defines a bit value of each dummy bit that will place the signal constellation of the symbol at the inmost possible region.

## Patentansprüche

1. Mehrstufenmodulationsverfahren, wobei eine Mehrstufenmodulation von Daten durchgeführt wird, indem Daten ein Leerbit hinzugefügt wird, wenn eine Anzahl von Bits der Daten geringer ist als eine Anzahl von Bits eines Funkrahmens, wobei das Mehrstufenmodulationsverfahren die folgenden Schritte umfasst:
Umsetzen eines Bitstroms der Daten so, dass ein spezifiziertes Bit mindestens eines Zeichens zu einem Leerbit wird, und darüber hinaus, wenn jedes Leerbit zu den Daten hinzugefügt wird, eines der Leerbits so bereitzustellen und seinen Wert zwischen "0" und "1" zu wählen, dass eine Signalkonstellation des Zeichens sich an einem soweit wie möglich innenliegenden Bereich befindet, und Übertragen der Daten, die aus mehreren Zeichen bestehen.

2. Mehrstufenmodulationsverfahren nach Anspruch 1, wobei, wenn das Zeichen eine 4-Bit-16-QAM durchläuft, ein Leerbit "0" den letzten beiden Bits des Zeichens zugeteilt wird.

3. Mehrstufenmodulationsverfahren nach Anspruch 1, wobei, wenn das Zeichen eine 4-Bit-16-QAM durchläuft, die Sendeleistung ausgeschaltet wird.

4. Mehrstufenmodulationsverfahren nach Anspruch 1, wobei, wenn das Zeichen eine 6-Bit-64-QAM durchläuft, ein Leerbit "0" dazwischenliegenden zwei Bits des Zeichens zugeteilt wird.

5. Mehrstufenmodulationsverfahren nach Anspruch 1, wobei, wenn das Zeichen eine 6-Bit-64-QAM durchläuft, ein Leerbit "0" dazwischenliegenden zwei Bits des Zeichens zugeteilt wird und ein Leerbit "1" den letzten beiden Bits des Zeichens zugeteilt wird.

6. Mehrstufenmodulationsverfahren nach Anspruch 1, wobei, wenn das Zeichen eine 6-Bit-64-QAM durchläuft, die Sendeleistung ausgeschaltet wird.

7. Mehrstufenmodulationsverfahren nach Anspruch 1, wobei, wenn die Leerbits den Daten hinzugefügt werden, die Leerbits auf mehrere Zeichen verteilt werden.

8. Mehrstufenmodulationsverfahren nach Anspruch 1, wobei zwei Leerbits jedem der Zeichen zugeteilt werden, und wenn selbst nach dem Zuteilen der beiden Leerbits zu jedem aller Zeichen, die Leerbits übrigbleiben, einigen der Zeichen weitere zwei Bits hinzugefügt werden.

9. Mehrstufenmodulationsverfahren nach Anspruch 1, wobei, wenn eine Mehrcodeübertragung der Daten durchgeführt wird, die Leerbits so umgesetzt werden, dass sich ihre Zuteilungspositionen in einzelnen Codes nicht gegenseitig überlagern.

10. Mehrstufenmodulationsverfahren nach Anspruch 1, wobei eines der Leerbits "0" oder "1" mit Bezug auf eine Tabelle gewählt wird, die einen Bitwert für jedes Leerbit festlegt, der die Signalkonstellation des Zeichens am soweit wie möglich innenliegenden Bereich setzt.

## Revendications

1. Procédé de modulation multi-niveaux, dans lequel la modulation multi-niveaux de données est exécutée en ajoutant un bit fictif aux données lorsqu'un nombre de bits des données est inférieur au nombre de bits d'une trame radio, le procédé de modulation multi-niveaux comprenant les étapes consistant à :
configurer un train de bits des données de telle sorte qu'un bit spécifié d'au moins un symbole devient un bit fictif, et en outre lors de l'ajout de chaque bit fictif aux données, disposer l'un des bits fictifs et sélectionner sa valeur entre « 0 » et « 1 », de sorte qu'une constellation de signaux du symbole est placée au niveau d'une région la plus à l'intérieur possible, et transmettre les données qui sont composées d'une pluralité de symboles.

2. Procédé de modulation multi-niveaux selon la revendication 1, dans lequel lorsque le symbole subit une MAQ-16 à 4 bits, un bit fictif de « 0 » est attribué aux deux derniers bits du symbole.

3. Procédé de modulation multi-niveaux selon la revendication 1, dans lequel lorsque le symbole subit une MAQ-16 à 4 bits, la puissance de transmission est coupée.

4. Procédé de modulation multi-niveaux selon la revendication 1, dans lequel lorsque le symbole subit une MAQ-16 à 6 bits, un bit fictif de « 0 » est attribué aux deux bits intermédiaires du symbole.

5. Procédé de modulation multi-niveaux selon la revendication 1, dans lequel lorsque le symbole subit une MAQ-16 à 6 bits, un bit fictif de « 0 » est attribué aux deux bits intermédiaires du symbole et un bit fictif de « 1 » est attribué aux deux derniers bits du symbole.

6. Procédé de modulation multi-niveaux selon la revendication 1, dans lequel lorsque le symbole subit une MAQ-16 à 6 bits, la puissance de transmission est coupée.

7. Procédé de modulation multi-niveaux selon la revendication 1, dans lequel lorsque les bits fictifs sont ajoutés aux données, les bits fictifs sont distribués à une pluralité de symboles.

8. Procédé de modulation multi-niveaux selon la revendication 1, dans lequel deux bits fictifs sont attribués à chacun des symboles, et lorsque les bits fictifs sont laissés, même après avoir attribué les deux bits fictifs à chacun de tous les symboles, deux autres bits sont attribués à certains des symboles.

9. Procédé de modulation multi-niveaux selon la revendication 1, dans lequel lorsque l'on réalise une transmission multi-code des données, les bits fictifs sont configurés de telle sorte que leurs positions d'attribution dans des codes individuels ne se chevauchent pas les unes les autres.

10. Procédé de modulation multi-niveaux selon la revendication 1, dans lequel l'un des bits fictifs de « 0 » et « 1 » est sélectionné en référence à un tableau qui définit une valeur de bit de chaque bit fictif qui placera la constellation de signaux du symbole au niveau de la région la plus à l'intérieur possible.
